(19) Europäisches Patentamt
European Patent Office
Office européen des brevets

(11) **EP 4 672 739 A1**

(12) **EUROPEAN PATENT APPLICATION**

(43) Date of publication:
**31.12.2025 Bulletin 2026/01**

(21) Application number: **24306020.9**

(22) Date of filing: **25.06.2024**

(51) International Patent Classification (IPC):
*H04N 19/103* (2014.01)    *H04N 19/117* (2014.01)
*H04N 19/157* (2014.01)    *H04N 19/176* (2014.01)
*H04N 19/513* (2014.01)    *H04N 19/523* (2014.01)
*H04N 19/577* (2014.01)    *H04N 19/80* (2014.01)
*H04N 19/82* (2014.01)

(52) Cooperative Patent Classification (CPC):
**H04N 19/117; H04N 19/103; H04N 19/157;
H04N 19/176; H04N 19/513; H04N 19/523;
H04N 19/577; H04N 19/80; H04N 19/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **BORDES, Philippe**
  **35890 LAILLE (FR)**
• **NASER, Karam**
  **35250 MOUAZE (FR)**
• **GALPIN, Franck**
  **35235 THORIGNE-FOUILLARD (FR)**
• **FRANCOIS, Edouard**
  **35890 BOURG DES COMPTES (FR)**

(74) Representative: **Interdigital
Immeuble ZEN 2
845 A, avenue des Champs Blancs
35510 Cesson-Sévigné (FR)**

(54) **ENCODING AND DECODING METHODS USING MULTIPLE MOTION COMPENSATION FILTERS AND CORRESPONDING APPARATUSES**

(57)    A decoding method is disclosed. A first motion compensation filter is selected in a case where a condition is true and a second motion compensation filter is selected otherwise. A current block is reconstructed based on an inter prediction obtained using the selected motion compensation filter.

The condition is true in a case where any one of the following conditions is true: the current block is predicted using CIIP, the current block is predicted using MHP, at least one motion vector component is below a value or has a given pel-accuracy, a picture reference index is equal to a given value, a temporal index is among a given set of temporal indices.

**500**

Select a first motion compensation filter in a case where a condition is true and a second motion compensation filter in a case where the condition is false, the second motion compensation filter being different from the first motion compensation filter, wherein the condition is true in a case where any one of the following conditions is true: the current block is predicted using combined intra-inter prediction (CIIP), the current block is predicted using multi-hypothesis prediction (MHP), at least one motion vector component associated with the current block is below a value, at least one motion vector component associated with the current block has a given pel-accuracy, a reference index of a picture used to obtain the inter prediction is equal to a given value, a temporal index of a picture used to obtain the inter prediction is among a given set of temporal indices — 502

Reconstruct a current block based on an inter prediction obtained using the selected motion compensation filter — 504

**FIG. 9**

## Description

<u>TECHNICAL FIELD</u>

At least one of the present embodiments generally relates to a method and an apparatus for encoding and decoding a picture block using multiple motion compensation filters.

<u>BACKGROUND</u>

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

<u>SUMMARY</u>

In one implementation, a first motion compensation filter is selected in a case where a condition is true and a second motion compensation filter is selected in a case where the condition is false, the second motion compensation filter being different from the first motion compensation filter. A current block may thus be reconstructed (encoded respectively) based on an inter prediction obtained using the selected motion compensation filter. The condition is true in a case where any one of the following conditions is true: the current block is predicted using combined intra-inter prediction (CIIP), the current block is predicted using multi-hypothesis prediction (MHP), at least one motion vector component associated with the current block is below a value, at least one motion vector component associated with the current block has a given pel-accuracy, a reference index of a picture used to obtain the inter prediction is equal to a given value, a temporal index of a picture used to obtain the inter prediction is among a given set of temporal indices.

<u>BRIEF DESCRIPTION OF THE DRAWINGS</u>

FIG. 1 illustrates a block diagram of a system within which aspects of the present embodiments may be implemented;

FIG. 2 illustrates a block diagram of an embodiment of a video encoder within which aspects of the present embodiments may be implemented;

FIG. 3 illustrates a block diagram of an embodiment of a video decoder within which aspects of the present embodiments may be implemented;

FIG. 4 illustrates various interpolation filters;

FIG. 5 depicts a flowchart of a method for inter-prediction using sharp motion compensation filter for bi-prediction;

FIG. 6 illustrates regular and sharp interpolation filters;

FIG. 7 depicts top and left neighboring blocks used in CIIP weight derivation;

FIG. 8 illustrates a division method for angular modes;

FIG. 9 depicts a flowchart of a method for reconstructing a block according to a specific example; and

FIG. 10 depicts a flowchart of a method for prediction according to another specific example.

<u>DETAILED DESCRIPTION</u>

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

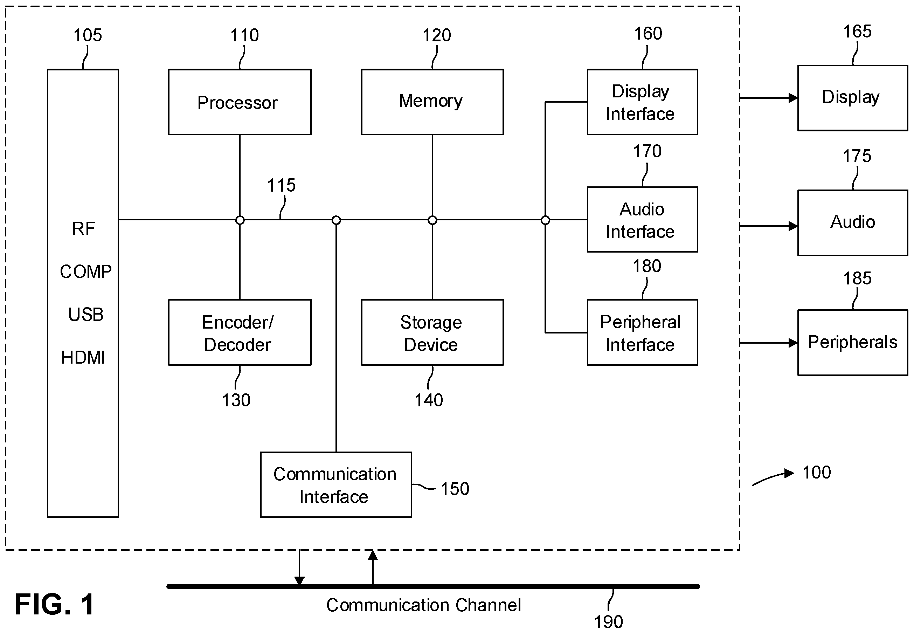

The aspects described and contemplated in this application can be implemented in many different forms. FIGs. 1, 2 and 3 below provide some embodiments, but other embodiments are contemplated and the discussion of FIGs. 1, 2 and 3 does not limit the breadth of the implementations. At least one of the aspects generally relates to video encoding and decoding, and at least one other aspect generally relates to transmitting a bitstream generated or encoded.

These and other aspects can be implemented as a method, an apparatus, a computer readable storage medium (e.g. a non-transitory computer readable storage medium) having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "encoded" or "coded" may be used interchangeably, the terms "pixel" and "sample" may be used interchangeably and the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

For the sake of clarity, satisfying, failing to satisfy a condition and configuring condition parameter(s) are described throughout embodiments described herein as relative to a threshold (e.g., greater, or lower than), a (e.g., threshold) value, configuring the (e.g., threshold) value, etc.). For example, satisfying a condition may be described as being above a (e.g., threshold) value, and failing to satisfy a condition (e.g., performance criteria) may be described as being below a (e.g., threshold) value. Embodiments described herein are not limited to threshold-based conditions. Any kind of other condition and parameter(s) (such as e.g., belonging or not belonging to a range of values) may be applicable to embodiments described herein.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

**FIG. 1** illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 100 may be provided through various input devices as indicated in block 105. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105. As indicated above, various embodiments provide data in a non-streaming manner. Additionally, various embodiments use wireless networks other than Wi-Fi, for example a cellular network or a Bluetooth network.

The system 100 may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other device. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100. For example, a disk player performs the function of playing the output of the system 100.

In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

The embodiments can be carried out by computer software implemented by the processor 110 or by hardware, or by a combination of hardware and software. As a non-limiting example, the embodiments can be implemented by one or more integrated circuits. The memory 120 can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 can be of any type appropriate to the technical environment, and can encompass one or more of microprocessors, general purpose computers, special purpose computers, and processors based on a multi-core architecture, as non-limiting examples.

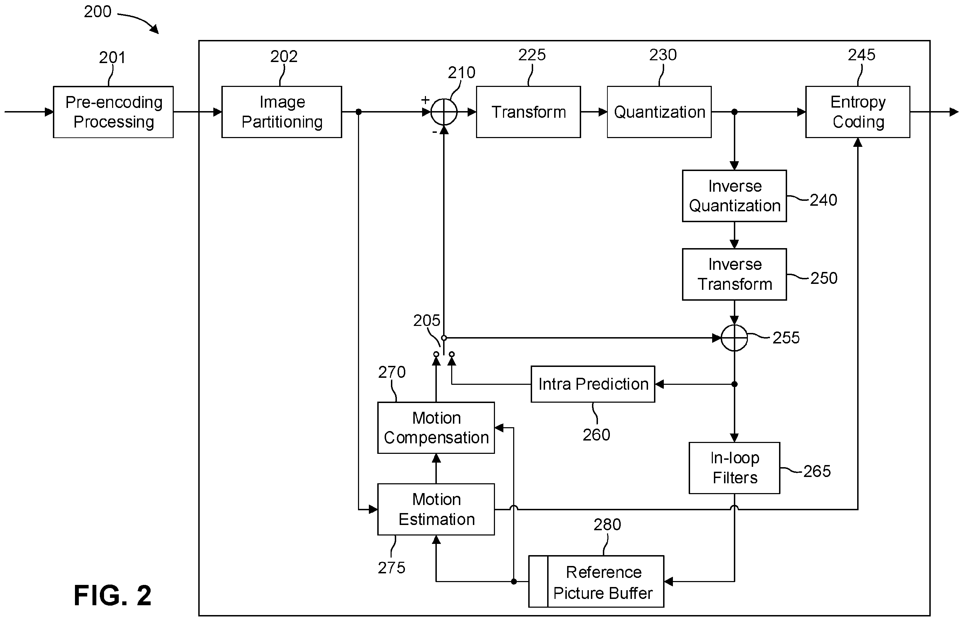

FIG. 2 illustrates an example video encoder 200 within which aspects of the present embodiments may be implemented. Variations of example encoder 200 are contemplated, but the encoder 200 is described below for purposes of clarity without describing all expected variations. In some examples, FIG. 2 also illustrate an encoder in which improvements are made to HEVC standard or VVC standard or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing and attached to the bitstream.

In the encoder 200, a picture is encoded by the encoder elements as described below. The picture to be encoded is partitioned (202) and processed in units of, for example, CTU (Coding Tree Units), CUs (Coding Units). Each unit is encoded using, for example, either an intra or inter mode. When a unit is encoded in an intra mode, it performs intra prediction (260), e.g. using an intra-prediction tool such as Decoder Side Intra Mode Derivation (DIMD). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block (a.k.a. prediction block) from the original image block.

The prediction residuals are then transformed (225) into transform coefficients c (a.k.a prediction residual transform coefficients) which are quantized (230) into quantization indexes $c_q$ (a.k.a transform coefficient levels or quantized transform coefficients on the encoder side). The quantization levels (a.k.a quantization indexes) $c_q$, as well as motion vectors and other syntax elements such as the picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) (a.k.a. scaled) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/BIF (Bilateral Filtering)/ALF (Adaptive Loop Filter) filtering to reduce encoding artifacts. The filtered image is stored in a reference picture buffer (280). In-loop filters (265) are thus used to enhance reconstructed images before storing them in the reference picture buffer (280). In-loop filters form a whole family. Among them, deblocking filters (DBF) aim at reducing blocking artifacts occurring along block boundaries. Deblocking filters are usually designed to improve subjective quality, that is, the noticeability of such coding errors by the human psychovisual system. In usual video coding standards such as HEVC and VVC, deblocking filters are predetermined based on coding information (such as prediction modes, motion vectors, transform coefficients) and on local variations across block boundaries. On the other hand, adaptive loop filters (ALF) are learnt at encoder side in order to minimize a mean squared error with respect to source images, then the learned filter weights are encoded into the bitstream. Adaptive loop filters are usually applied at CTU-level, while deblocking filters are applied along block borders. The quantization of the residual coefficients may produce ringing artifacts around edges, both in still images and in moving objects in videos. Applying a bilateral filter (BIF) may significantly reduce ringing artifacts. BIF may be applied on decoded sample values directly after the inverse transform or on reconstructed samples after the deblocking filter.

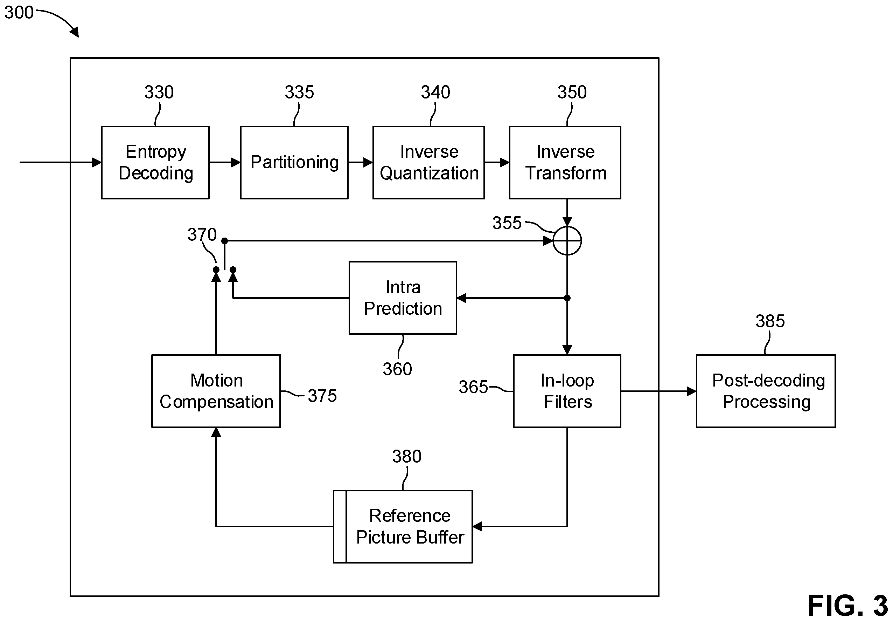

**FIG. 3** illustrates a block diagram of an example video decoder 300 within which aspects of the present embodiments may be implemented. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data. Variations of example decoder 300 are contemplated, but the decoder 300 is described below for purposes of clarity without describing all expected variations.

In particular, the input of the decoder includes a video bitstream, which can be generated by video encoder 200. The bitstream is first entropy decoded (330) to obtain quantization levels $c_q$ (a.k.a. transform coefficient levels or quantization levels on the decoder side), prediction modes, motion vectors, and other coded information. The picture partition information indicates how the picture is partitioned. The decoder may therefore divide (335) the picture according to the decoded picture partitioning information. The quantization levels $c_q$ are de-quantized (340) into reconstructed transform coefficients $c_r$. De-quantization is also named scaling. The reconstructed transform coefficients $c_r$ are inverse transformed (350) to obtain the prediction residuals. Combining (355) the prediction residuals and the predicted block (a.k.a. prediction block), an image block is reconstructed. The predicted block can be obtained (370) from intra prediction (360) or motion-compensated prediction (i.e., inter prediction) (375). In-loop filters (365), e.g., the same in-loop filters as applied on the encoder side (265), are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

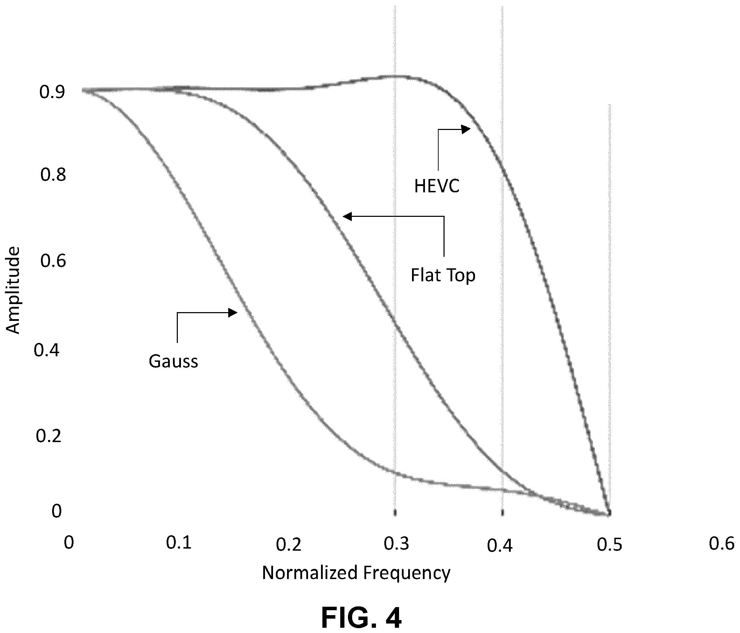

In addition to in-loop filters 265 and 365, switchable interpolation filter (a.k.a. SIF) may be used, e.g., to improve the motion compensation (MC) prediction. In an example, an interpolation filter is selected that is used for each block prediction. The selection may be done by selecting an index (IF-idx) of the filter. The index may be signaled (e.g., coded) in the bitstream or inherited from coding (e.g., merge mode) candidates. The interpolation filters may differ depending on smoothing characteristics typically. An example of such interpolation filters is provided in Table 1 and further depicted on **FIG. 4.**

Table 1 - Interpolation filters

| Filter | Coefficients h[i] |
| --- | --- |
| HEVC | [-1 4 -11 40 40 -11 4 -1] |
| Flat Top | [-3 4 31 31 4 -3] |
| Gauss | [3 9 20 20 9 3] |

In an example, e.g., in VVC, SIF is applied if reconstructed MV component (X and/or Y) is half-pel only.

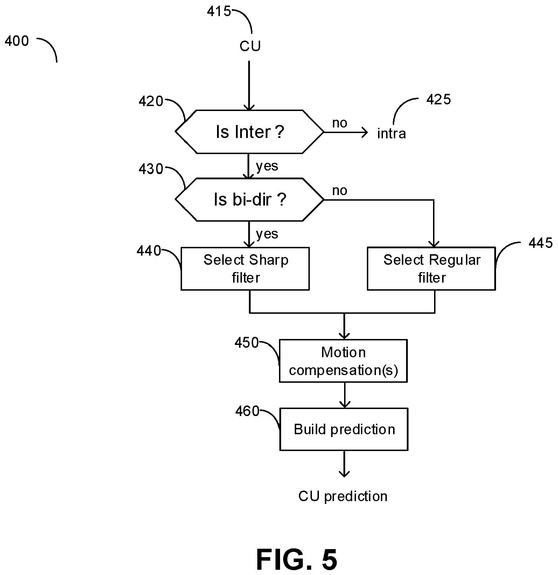

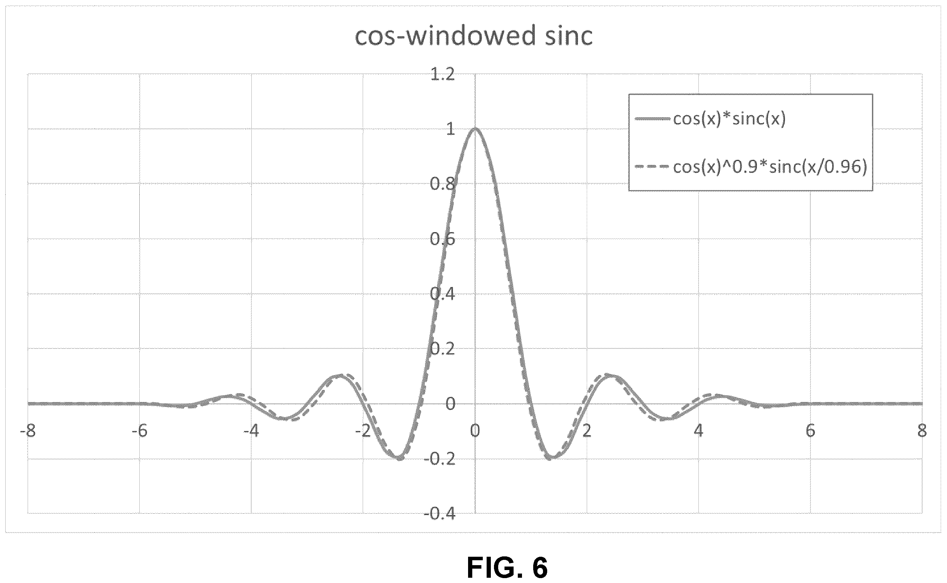

**FIG. 5** depicts a flowchart of another method for inter-prediction selecting implicitly sharp motion compensation filter for bi-prediction. An additional luma filter (e.g., a sharp filter) is implicitly selected at 440 for bi-predicted blocks in inter mode (420, 430), while an existing motion compensation interpolation filter (MCIF) is still selected at 445 for uni-predicted blocks. The additional luma filter has slightly sharper filter properties compared to the existing MCIF (a.k.a. regular filter) as depicted on **FIG. 6.** On this figure, the regular filter is represented with a plain line and the sharp filter with a dashed line. Using alternative (e.g., sharper filter) motion compensation filter for bi-prediction makes it possible to compensate for the additional filtering (e.g., smoothing) that occurs during bi-prediction. Motion compensation is performed at 450 using the selected filter and the prediction is obtained, e.g., built or determined, at 460 that is used to encode (decode respectively) a current block or CU (coding unit).

In the previous example, the alternative (e.g. sharper filter) motion compensation filter is only used in case of bi-prediction. Other prediction modes (e.g., CIIP, MHP) that combine at least one inter prediction with another inter or intra prediction may benefit from the use of alternative motion compensation filter.

A method is disclosed that uses alternative (e.g., sharper filter) motion compensation filter for specific prediction modes (e.g., CIIP, MHP). The method is also used to select a motion compensation filter based on motion vector components, e.g., select a sharper filter in case of small motion vector component(s). The method may also be used to select a motion compensation filter based on accuracy (e.g., sub-pel value) of motion vector components. In an example, the alternative filter is not used (e.g., regular filter is used instead) for bi-prediction in a case where at least one prediction is full pel or other pre-defined sub-pel precision. In another example, the MC filter that is used for a block is signaled in a bitstream, e.g., for large bi-predicted PUs or CUs bi-predicted.

## Combined Intra-Inter Prediction (CIIP)

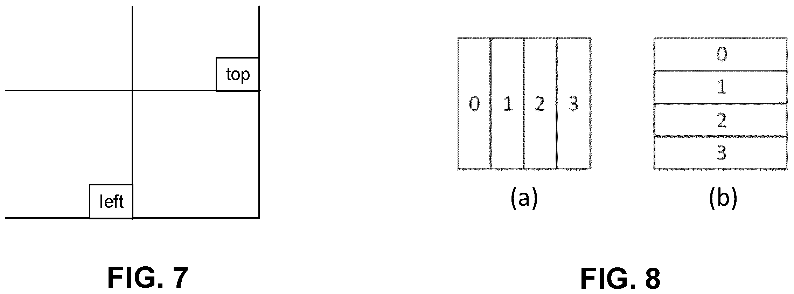

The inter-prediction may be combined with intra prediction. For example, in VVC, if the current CU is coded in Inter mode, an additional flag is signaled to indicate if the combined inter/intra prediction (CIIP) mode is applied to the current CU. The inter prediction signal in the CIIP mode $P_{inter}$ is derived using the same inter prediction process applied to regular merge mode; and the intra prediction signal $P_{intra}$ is derived following the regular intra prediction process with the planar mode. Then, the intra and inter prediction signals are combined using weighted averaging, where the weight value is calculated depending on the coding modes of the top and left neighboring blocks. **FIG. 7** depicts top and left neighboring blocks used in CIIP weight derivation.

If the top neighbor is available and intra coded, then set isIntraTop to 1, otherwise set isIntraTop to 0;

if the left neighbor is available and intra coded, then set isIntraLeft to 1, otherwise set isIntraLeft to 0;

if (isIntraLeft + isIntraTop) is equal to 2, then wt is set to 3;

otherwise, if (isIntraLeft + isIntraTop) is equal to 1, then wt is set to 2;

otherwise, set wt to 1.

The CIIP prediction is formed with wIntra=wt and wInter=(4-wt) as follows:

$$P_{CIIP} = ( \text{wInter}*P_{inter} + \text{wIntra}*P_{intra} + 2 ) \gg 2 \qquad (1)$$

In ECM, the TIMD derivation (template-based intra mode derivation) method is used to derive the intra prediction mode in CIIP. Specifically, the intra prediction mode with the smallest SATD values (sum of absolute transformed differences) in the TIMD mode list is selected and mapped to one of the 67 regular intra prediction modes.

In addition, the computation of the weights (wIntra, wInter) is also modified if the derived intra prediction mode is an angular mode. For near-horizontal modes (2 <= angular mode index < 34), the current block is vertically divided as shown in FIG. 8(a); for near-vertical modes (34 <= angular mode index <= 66), the current block is horizontally divided as shown in FIG. 8(b).

The (wIntra, wInter) for different sub-blocks are shown in Table 2.

Table 2 - The modified weights used for angular modes

| The sub-block index | (wIntra, wInter) |
|---|---|
| 0 | (6, 2) |
| 1 | (5, 3) |
| 2 | (3, 5) |

(continued)

| The sub-block index | (wIntra, wInter) |
|---|---|
| 3 | (2, 6) |

With CIIP-TM, a CIIP-TM merge candidate list is built for the CIIP-TM mode. The merge candidates are refined by template matching. The CIIP-TM merge candidates are also reordered by the ARMC (acronym of Adaptive Re-ordering of Merge Candidates) method as regular merge candidates. The maximum number of CIIP-TM merge candidates is equal to two.

**Multi-hypothesis prediction (MHP)**

In the multi-hypothesis inter prediction mode, one or more additional motion-compensated prediction signals are signaled in addition to the conventional bi-prediction signal. The resulting overall prediction signal is obtained by sample-wise weighted superposition. With the bi-prediction signal $p_{bi}$ and the first additional inter prediction signal/hypothesis $h_3$, the resulting prediction signal $p_3$ is obtained as follows:

$$p_3 = (1-\alpha).p_{bi} + \alpha.h_3 \qquad (2)$$

The weighting factor $\alpha$ is specified by a syntax element add_hyp_weight_idx according to the following mapping table:

Table 3 - mapping Table

| add_hyp_weight_idx | $\alpha$ |
|---|---|
| 0 | 1/4 |
| 1 | -1/8 |

Analogously to above, more than one additional prediction signal can be used. The resulting overall prediction signal is accumulated iteratively with each additional prediction signal.

$$p_{n+1} = (1 - \alpha_{n+1}).p_n + \alpha_{n+1}.h_{n+1} \qquad (3)$$

where n indicates the iteration number. The resulting overall prediction signal is obtained as the last $p_n$ (i.e., the $p_n$ having the largest index n). In ECM, up to two additional prediction signals can be used (i.e., n is limited to 2).

The motion parameters of each additional prediction hypothesis can be signaled either explicitly by specifying the reference index, the motion vector predictor index, and the motion vector difference, or implicitly by specifying a merge index. A separate multi-hypothesis merge flag distinguishes between these two signaling modes.

For inter AMVP mode (Advanced Motion Vector Prediction mode), MHP is only applied if non-equal weight in BCW (Bi-prediction with CU level Weight) is selected in bi-prediction mode.

The various examples disclosed below may be implemented in the encoder 200 of FIG. 2 or in decoder 300 of FIG. 3. In particular, the various methods and other aspects described in this application can be used to modify any one of modules 270, 260 and 375, 360 of the video encoder 200 and decoder 300 as shown in FIG. 2 and FIG. 3.

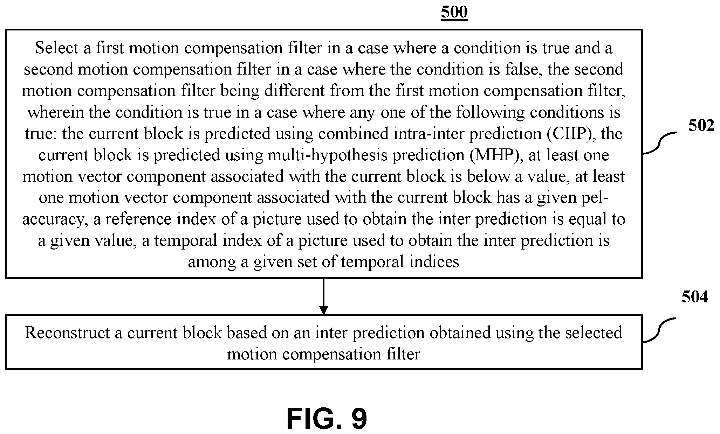

**FIG. 9** depicts a flowchart of a method 500 for reconstructing a block according to an example. This method may be part of an encoding or a decoding method.

At 502, a first motion compensation filter is selected in a case where a condition is true, otherwise (the condition is false) a second motion compensation filter is selected, the second motion compensation filter being different from the first motion compensation filter. The condition is true in a case where any one of the following conditions is true: the current block is predicted using combined intra-inter prediction (CIIP), the current block is predicted using multi-hypothesis prediction (MHP), at least one motion vector component associated with the current block is below a value, at least one motion vector component associated with the current block has a given pel-accuracy, a reference index of a picture used to obtain the inter prediction is equal to a given value, and a temporal index of a picture used to obtain the inter prediction is among a given set of temporal indices.

At 504, a current block is reconstructed based on an inter prediction obtained using the selected motion compensation filter. In an example, motion compensation is performed using the selected motion compensation filter and a prediction of the current block is obtained (e.g., determined or built). The prediction is then used to reconstruct (encode respectively) the current block. In an encoder, the current block may be encoded based on the inter prediction obtained using the selected motion compensation filter.

In an example, the first motion compensation filter is sharper than the second motion compensation filter.

In an example, in a case where the current block is predicted using CIIP, the condition is true if a weight associated with inter prediction is above a value.

In an example, in a case where the current block is predicted using MHP, the condition is true if a weight associated with an additional inter-prediction hypothesis is above a value.

In an example, in a case where the current block is predicted using MHP, the condition is true if an iteration number of MHP is equal or above a value.

In an example, a flag is decoded (encoded respectively) for the current block that indicates whether the first motion compensation filter or the second motion compensation filter is used in a case where a block size is above a value.

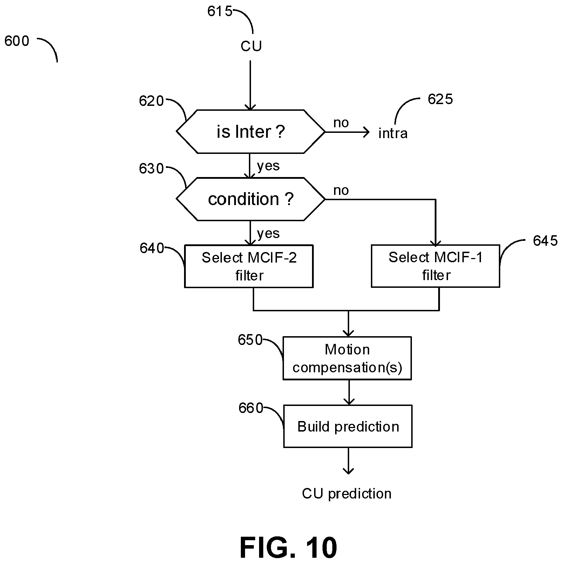

**FIG. 10** depicts a flowchart of a prediction method 600 according to an example. This method may be part of an encoding or a decoding method.

At 620, it is checked whether a current block (e.g., CU 615) to be encoded (decoded respectively) is coded in inter mode or more generally if it uses at least one inter-prediction block (e.g., in case of intra/inter combination). If the block is not in inter mode then it is in intra mode 625. If the block is coded in inter mode, then it is checked whether a condition is fulfilled (e.g., if it is true) 630. If the condition is not fulfilled (e.g., if the condition is false) a first motion compensation filter MCIF-1 is selected at 645. For example, the MCIF-1 may be the regular/classical motion compensation interpolation filter (e.g., the filter represented with a plain line on FIG. 6). Otherwise (the condition is fulfilled or is true), a second motion compensation filter MCIF-2 is selected at 640, wherein MCIF-2 is different (e.g., sharper such as the filter represented with a dotted line on FIG. 6) from MCIF-1. Motion compensation is performed at 650 using the selected filter and a prediction of the current block is obtained (e.g., determined or built) at 660. The prediction is then used to encode (reconstruct respectively) the current block.

A flag may be encoded (decoded respectively) per block (e.g., per CU) to indicate if MCIF-1 or MCIF-2 is used for the block. In this case, a decoder deduces which filter to apply from the value of the flag. In a variant, the flag may be encoded (decoded respectively) if the size of the block is above a value. In the latter case, a decoder deduces, for large block, which filter to apply from the value of the flag while it checks the condition for smaller blocks to determine which filter to apply.

In an example, if the coding mode of a current block 615 coded in inter mode is CIIP (e.g., the condition checked at 630 is "CIIP flag is true"), MCIF-2 may be selected at 640, else (condition is false) MCIF-1 may be selected at 645 to perform the motion compensation at 650. The CIIP flag is true to indicate that the current block is coded in CIIP mode. That is a coding mode where the prediction is built as a combination of at least one inter-prediction (motion-compensated prediction) and at least one intra-prediction (prediction built with a set of reconstructed samples of the current picture or slice. At 660, the CIIP prediction is obtained (e.g., determined or built) by combining intra and inter predictions, e.g., as for regular CIIP. In a variant, the condition checked at 630 may be "CIIP flag is true and the inter prediction part is bi-prediction". In another example, the condition checked at 630 may be "CIIP flag is true or the inter prediction part is bi-prediction".

In a variant, the condition may further include a test on the value of the combination weight(s). For example, the condition may depend on a combination weight value (e.g., wInter) of equation (1) in addition to the condition on CIIP flag being true. For example, if wInter is above a value V0, then MCIF-2 is selected, else (wInter is below the value V0) MCIF-1 is selected. In a variant, if wInter is below a value V1, then MCIF-2 is selected, else (wInter is above the value V1) MCIF-1 is selected.

In another example, if the coding mode of a current block 615 coded in inter mode is MHP (e.g., the condition checked at 630 is "MHP flag is true"), MCIF-2 may be selected at 640, else (condition is false) MCIF-1 may be selected at 645 to perform the motion compensation at 650. The MHP flag is true to indicate that the current block is coded in MHP mode. That is a coding mode where the prediction is built as (e.g., weighted) combination of additional motion-compensated prediction signals, in addition to the conventional bi-prediction signal. At 660, the MHP prediction is obtained (e.g., determined or built) by combining inter predictions, e.g., as for regular MHP.

In a variant, which may be combined with previous one, the condition may further include a test on the value of the combination weight used with MHP. For example, the condition may depend on the combination weight $(1 - \alpha_{n+1})$ value of equation (3). For example, if the weight is above a value V2, then MCIF-2 is selected, else (weight is below the value V2) MCIF-1 is selected. In a variant, if the weight is below a value V3, then MCIF-2 is selected, else (weight is above the value V3) MCIF-1 is selected. In another variant, the condition may depend on the value of the iteration number n of the prediction. For example, if the iteration number n of MHP is superior or equal to a value (e.g., to 3), then the condition is true, else the condition is false.

In yet another example, if the current block 615 is coded in inter mode 620 and if at least one (e.g., all) MV component value(s) (e.g., MVx or/and MVy) is above a value V4, then the condition is true at 630 and MCIF-2 is selected at 640. Otherwise (condition is false) MCIF-1 is selected at 645 to perform the motion compensation at 650. In a variant, if the current block 615 is coded in inter mode 620 and if at least one (e.g., all) MV component value(s) (e.g., MVx or/and MVy) is below a value V5, then the condition is true at 630 and MCIF-2 is selected at 640. Otherwise (condition is false) MCIF-1 is selected at 645 to perform the motion compensation at 650. At 660, the prediction(s) is (are) obtained (e.g., determined or built), e.g., as regularly. In this example, MCIF-1 or MCIF-2 is selected to perform both horizontal and vertical filtering. In a variant, the condition checked at 630 may be "MVx or/and MVy is above V4 and the inter prediction part is bi-prediction". In another example, the condition checked at 630 may be "MVx or/and MVy is above V4 or the inter prediction part is bi-prediction". In a variant, the condition checked at 630 may be "MVx or/and MVy is below V5 and the inter prediction part is bi-prediction". In another example, the condition checked at 630 may be "MVx or/and MVy is below V5 or the inter prediction part is bi-prediction".

In a variant, if MVz (with z=x or y) is above a value V6, then the condition is true at 630 and MCIF-2 is selected at 640 to perform horizontal (z=x) and/or vertical (z=y) motion compensation interpolation in the direction of z, otherwise (condition is false) MCIF-1 is selected at 645 to perform the motion compensation interpolation in the direction of z at 650. In this example, MCIF-1 may be selected to perform horizontal filtering and MCIF-2 may be selected to perform vertical filtering. Inversely, MCIF-2 may be selected to perform horizontal filtering and MCIF-1 may be selected to perform vertical filtering.

In a variant, if MVz (with z=x or y) is below a value V7, then the condition is true at 630 and MCIF-2 is selected at 640 to perform horizontal (z=x) and/or vertical (z=y) motion compensation interpolation in the direction of z, else (condition is false) MCIF-1 is selected at 645 to perform the motion compensation interpolation in the direction of z at 650.

In another example which may be combined with previous examples, if a reference index of the picture used to obtain (e.g., determine or build) an inter-prediction (e.g., at least one inter-prediction) is equal to (e.g., at least one) a value (e.g., a pre-determined value) ref-idx-if-sharp, then condition is true, otherwise condition is false. In a variant, if the reference index of the picture used to obtain (e.g., determine or build) an inter-prediction (e.g., at least one inter-prediction) is equal to the value ref-idx-if-sharp, then condition is false, otherwise condition is true. The value(s) of ref-idx-if-sharp may be signaled in the bitstream. The signaling of ref-idx-if-sharp may be made at picture or slice level for example.

In another example which may be combined with previous examples, if a temporal index (ID) of the reference picture used for the inter-prediction is among a set of (e.g., predefined) temporal IDs, then condition is true, else condition is false. In a variant which may be combined with previous examples, if a temporal index (ID) of the reference picture used for the inter-prediction is among a set of predefined temporal IDs, then condition is false, else condition is true. The set of temporal IDs may be signaled in the bitstream, for example at SPS (Sequence Parameter Set) level. For example, the set may comprise temporal ID equal to 0.

In another example, for a current block (CU) 615 coded in inter mode 620, if at least one (or all) MV component/direction value(s) (e.g., MVx or/and MVy) is full-pel, then condition is true (630) and MCIF-2 is selected at 640 for this prediction, else (condition is false) MCIF-1 is selected at 645 to perform the motion compensation at 650. At 660, the prediction(s) is (are) obtained (e.g., determined or built), e.g. as regularly. In a variant, the condition checked at 630 may be "MVx or/and MVy is full-pel and the inter prediction part is bi-prediction". In another example, the condition checked at 630 may be "MVx or/and MVy is full-pel or the inter prediction part is bi-prediction". In another example, MCIF-1 may be selected to perform horizontal filtering (e.g., if MVx is full pel) and MCIF-2 may be selected to perform vertical filtering (e.g., if MVy is full pel). Inversely, MCIF-2 may be selected to perform horizontal filtering (e.g., if MVx is full pel) and MCIF-1 may be selected to perform vertical filtering (e.g., if MVy is full pel).

In a variant that may be combined with examples, in case of bi-prediction, if one prediction has (at least one or all) MV component that is full pel, then MCIF-1 (e.g., regular filter) is selected, else MCIF-2 is selected. In a variant, the condition may include pel-accuracy(ies) other than full-pel, for example, the condition may request either full-pel, half-pel accuracy or quarter pel. The set of pel accuracies leading to "condition is true" may be signaled in high-level syntax structure such as SPS (Sequence Parameter Set) or PPS (Picture Parameter Set).

Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Note that syntax elements as used herein, such as terms in equations and algorithms, signal (e.g., flag, mode) labels/names, and so on, are descriptive terms. As such, they do not preclude the use of other syntax element names.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, predict a current block using motion compensation filter selected based on the block being a CIIP coded block, a MHP coded block, based on MV components of the block or based on pel-accuracy of MV components of the block.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, predict a current block using motion compensation filter selected based on the block being a CIIP coded block, a MHP coded block, based on MV components of the block or based on pel-accuracy of MV components of the block.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, or a slice header), or an SEI message. Other manners are also available, including for example manners common for system level or application level standards such as putting the information into one or more of the following:

> a. SDP (session description protocol), a format for describing multimedia communication sessions for the purposes of session announcement and session invitation, for example as described in RFCs and used in conjunction with RTP (Real-time Transport Protocol) transmission.
> b. DASH MPD (Media Presentation Description) Descriptors, for example as used in DASH and transmitted over HTTP, a Descriptor is associated with a Representation or collection of Representations to provide additional characteristic to the content Representation.
> c. RTP header extensions, for example as used during RTP streaming.
> d. ISO Base Media File Format, for example as used in OMAF and using boxes which are object-oriented building blocks defined by a unique type identifier and length also known as 'atoms' in some specifications.
> e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed. Further, the terms "any of" or "any one of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items.

Also, as used herein, the word "signal" refers to, among other things, indicating something to a corresponding decoder. For example, in certain embodiments the encoder signals a particular one of a plurality of motion compensation filter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

A number of embodiments has been described above. Features of these embodiments can be provided alone or in any combination, across various claim categories and types.

**Claims**

1.  A decoding method comprising:

    selecting a first motion compensation filter in a case where a condition is true and a second motion compensation filter in a case where the condition is false, the second motion compensation filter being different from the first motion compensation filter ; and
    reconstructing a current block based on an inter prediction obtained using the selected motion compensation filter;
    wherein the condition is true in a case where any one of the following conditions is true: the current block is predicted using combined intra-inter prediction (CIIP), the current block is predicted using multi-hypothesis prediction (MHP), at least one motion vector component associated with the current block is below a value, at least one motion vector component associated with the current block has a given pel-accuracy, a reference index of a picture used to obtain the inter prediction is equal to a given value, a temporal index of a picture used to obtain the inter prediction is among a given set of temporal indices.

2.  The decoding method of claim 1, wherein the first motion compensation filter is sharper than the second motion compensation filter.

3.  The decoding method of claim 1 or 2, wherein in a case where the current block is predicted using CIIP, the condition is true if a weight associated with inter prediction is above a value.

4.  The decoding method of claim 1 or 2, wherein in a case where the current block is predicted using MHP, the condition is true if a weight associated with an additional inter-prediction hypothesis is above a value.

5.  The decoding method of claim 1 or 2, wherein in a case where the current block is predicted using MHP, the condition is true if an iteration number of MHP is equal or above a value.

6.  The decoding method of any one of claims 1 to 5, comprising decoding a flag for the current block that indicates whether the first motion compensation filter or the second motion compensation filter is used in a case where a block size is above a value.

7.  An encoding method comprising:

    selecting a first motion compensation filter in a case where a condition is true and a second motion compensation filter in a case where the condition is false, the second motion compensation filter being different from the first motion compensation filter ; and
    encoding a current block based on an inter prediction obtained using the selected motion compensation filter;
    wherein the condition is true in a case where any one of the following conditions is true: the current block is predicted using combined intra-inter prediction (CIIP), the current block is predicted using multi-hypothesis prediction (MHP), at least one motion vector component associated with the current block is below a value, at least one motion vector component associated with the current block has a given pel-accuracy, a reference index of a picture used to obtain the inter prediction is equal to a given value, a temporal index of a picture used to obtain the inter prediction is among a given set of temporal indices.

8.  The encoding method of claim 7, wherein the first motion compensation filter is sharper than the second motion compensation filter.

9.  The encoding method of claim 7 or 8, wherein in a case where the current block is predicted using CIIP, the condition is true if a weight associated with inter prediction is above a value.

10. The encoding method of claim 7 or 8, wherein in a case where the current block is predicted using MHP, the condition is true if a weight associated with an additional inter-prediction hypothesis is above a value.

11. The encoding method of claim 7 or 8, wherein in a case where the current block is predicted using MHP, the condition is true if an iteration number of MHP is equal or above a value.

12. The encoding method of any one of claims 7 to 11, comprising encoding a flag for the current block that indicates whether the first motion compensation filter or the second motion compensation filter is used in a case where a block size is above a value.

13. A decoding apparatus comprising one or more processors and at least one memory coupled to said one or more processors, wherein said one or more processors are configured to perform the decoding method of any one of claims 1-6.

14. An encoding apparatus comprising one or more processors and at least one memory coupled to said one or more processors, wherein said one or more processors are configured to perform the encoding method of any one of claims 7-12.

15. A computer readable storage medium having stored thereon instructions for implementing the method of any one of claims 1-12.

FIG. 1

EP 4 672 739 A1

**FIG. 2**

FIG. 3

FIG. 4

**FIG. 5**

cos-windowed sinc

cos(x)*sinc(x)
cos(x)^0.9*sinc(x/0.96)

**FIG. 6**

| 0 | 1 | 2 | 3 |
|---|---|---|---|

(b)

| 0 | 1 | 2 | 3 |
|---|---|---|---|

(a)

**FIG. 8**

| | top |
|---|---|
| | |
| left | |

**FIG. 7**

**500**

| |
|---|
| Select a first motion compensation filter in a case where a condition is true and a second motion compensation filter in a case where the condition is false, the second motion compensation filter being different from the first motion compensation filter, wherein the condition is true in a case where any one of the following conditions is true: the current block is predicted using combined intra-inter prediction (CIIP), the current block is predicted using multi-hypothesis prediction (MHP), at least one motion vector component associated with the current block is below a value, at least one motion vector component associated with the current block has a given pel-accuracy, a reference index of a picture used to obtain the inter prediction is equal to a given value, a temporal index of a picture used to obtain the inter prediction is among a given set of temporal indices |

502

504

| |
|---|
| Reconstruct a current block based on an inter prediction obtained using the selected motion compensation filter |

# FIG. 9

EP 4 672 739 A1

**FIG. 10**

Europäisches
Patentamt

European
Patent Office

Office européen
des brevets

## EUROPEAN SEARCH REPORT

Application Number

EP 24 30 6020

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/032143 A1 (BEIJING BYTEDANCE NETWORK TECH CO LTD [CN]; BYTEDANCE INC [US]) 25 February 2021 (2021-02-25) * page 20, paragraph 92 - page 29, paragraph 95 * ----- | 1-15 | INV. H04N19/103 H04N19/117 H04N19/157 H04N19/176 H04N19/513 |
| X | EP 4 304 181 A2 (BEIJING BYTEDANCE NETWORK TECH CO LTD [CN]; BYTEDANCE INC [US]) 10 January 2024 (2024-01-10) * paragraph [0077] - paragraph [0102] * ----- | 1-15 | H04N19/523 H04N19/577 H04N19/80 H04N19/82 |
| X | US 2022/086484 A1 (ZHANG LI [US] ET AL) 17 March 2022 (2022-03-17) * paragraph [0325] - paragraph [0454] * ----- | 1-15 | |
| X | WO 2023/025098 A1 (BEIJING BYTEDANCE NETWORK TECH CO LTD [CN]; BYTEDANCE INC [US]) 2 March 2023 (2023-03-02) * page 51, line 15 - page 83, line 2 * ----- | 1-15 | |
| | | | **TECHNICAL FIELDS SEARCHED (IPC)** H04N |

The present search report has been drawn up for all claims

| Place of search | Date of completion of the search | Examiner |
|---|---|---|
| Munich | 12 November 2024 | Schoeyer, Marnix |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 6020

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2024

| Patent document cited in search report | Publication date | Patent family member(s) | Publication date |
|---|---|---|---|
| WO 2021032143 A1 | 25-02-2021 | BR 112022002480 A2 | 26-04-2022 |
| | | CN 114270856 A | 01-04-2022 |
| | | CN 117395411 A | 12-01-2024 |
| | | EP 3997881 A1 | 18-05-2022 |
| | | JP 7359942 B2 | 11-10-2023 |
| | | JP 2022544667 A | 20-10-2022 |
| | | JP 2023171861 A | 05-12-2023 |
| | | KR 20220043133 A | 05-04-2022 |
| | | US 2022132111 A1 | 28-04-2022 |
| | | US 2023076783 A1 | 09-03-2023 |
| | | WO 2021032143 A1 | 25-02-2021 |
| EP 4304181 A2 | 10-01-2024 | AU 2020250609 A1 | 28-10-2021 |
| | | BR 112021019176 A2 | 14-12-2021 |
| | | CA 3135332 A1 | 08-10-2020 |
| | | CN 113647110 A | 12-11-2021 |
| | | CN 113661706 A | 16-11-2021 |
| | | CN 113711589 A | 26-11-2021 |
| | | CN 113711592 A | 26-11-2021 |
| | | CN 113728633 A | 30-11-2021 |
| | | CN 117459718 A | 26-01-2024 |
| | | EP 3932058 A1 | 05-01-2022 |
| | | EP 4304181 A2 | 10-01-2024 |
| | | JP 7307191 B2 | 11-07-2023 |
| | | JP 2022527896 A | 07-06-2022 |
| | | JP 2023123700 A | 05-09-2023 |
| | | KR 20210143772 A | 29-11-2021 |
| | | KR 20230157529 A | 16-11-2023 |
| | | SG 11202110650W A | 28-10-2021 |
| | | US 2022014734 A1 | 13-01-2022 |
| | | US 2022014790 A1 | 13-01-2022 |
| | | US 2022014791 A1 | 13-01-2022 |
| | | US 2023188710 A1 | 15-06-2023 |
| | | WO 2020200234 A1 | 08-10-2020 |
| | | WO 2020200235 A1 | 08-10-2020 |
| | | WO 2020200236 A1 | 08-10-2020 |
| | | WO 2020200237 A1 | 08-10-2020 |
| | | WO 2020200238 A1 | 08-10-2020 |
| | | ZA 202107294 B | 25-10-2023 |
| US 2022086484 A1 | 17-03-2022 | CN 113994682 A | 28-01-2022 |
| | | US 2022086484 A1 | 17-03-2022 |
| | | US 2024373061 A1 | 07-11-2024 |
| | | WO 2020248925 A1 | 17-12-2020 |
| WO 2023025098 A1 | 02-03-2023 | CN 118285102 A | 02-07-2024 |

EPO FORM P0459

For more details about this annex : see Official Journal of the European Patent Office, No. 12/82

page 1 of 2

# EP 4 672 739 A1

## ANNEX TO THE EUROPEAN SEARCH REPORT
## ON EUROPEAN PATENT APPLICATION NO.

EP 24 30 6020

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2024

| Patent document cited in search report | Publication date | Patent family member(s) | Publication date |
|---|---|---|---|
| | | US 2024195952 A1 | 13-06-2024 |
| | | WO 2023025098 A1 | 02-03-2023 |

EPO FORM P0459

For more details about this annex : see Official Journal of the European Patent Office, No. 12/82

page 2 of 2